# EUROPEAN PATENT APPLICATION

(11) **EP 1 983 724 A1**
(43) Date of publication of application: **22.10.2008**
(21) Application number: 08004297.1
(22) Date of filing: 07.03.2008
(51) Int. Cl.: H04L 29/08

(54) **Selective user monitoring in an online environment**

(30) Priority: 09.03.2007 US 716378
(71) Applicant: Gemini Mobile Technologies, Inc., San Mateo CA 94403 (US)
(72) Inventor: Ogasawara, Gary hayato, 94404 Foster City, CA (US); Norton, Joseph Wayne, 112-002 Bunkyo, Tokyo (JP)
(74) Representative: Wilhelm, Martin

(57) **Abstract**

A subject user may selectively monitor one or more other users in an online environment. In one embodiment, a subject user may access a directory of available online users that are located within a particular predefined portion of the online environment. The order of the available online users in the directory may be based on at least one of the subject user's preferences and profile data. The subject user may then select a subset of the available online users from this directory. The subject user may receive periodically-updated information regarding the selected subset of available online users. In one embodiment, this may include information on the selected user(s) location, profile, status and/or actions.

## Description

### CROSS REFERENCE TO RELATED APPLICATION

This application is a continuation-in-part of application Ser. No. 11/292,841, filed Dec. 1, 2005 and published as U.S. Publication No. 2007/001161, which claims priority to U.S. Provisional Patent Application No. 60/697,335, filed on Jul. 6, 2005.

### FIELD OF THE INVENTION

The present invention relates generally to user monitoring in an online environment, and more particularly to selectively monitoring a user-defined set of other online users.

### BACKGROUND OF THE INVENTION

Multi-user online communities and environments are becoming an ever increasing setting in which individuals can interact with others. Recognizing this, wireless carriers are continually offering new services and content to their mobile subscribers, such as online gaming, Internet browsing, online shopping and social networking. However, many of these activities must be carried out using a mobile browser application executing on the mobile device, which is inherently a resource-limited environment. Such mobile devices (e.g., personal digital assistants (PDAs), cellular telephones, smartphones, etc.) tend to have significantly limited processing resources and lack the full functionality of traditional personal computers (PCs). Moreover, mobile devices typically communicate over cellular networks which historically suffer from significant bandwidth and speed limitations. Mobile web browsing, for example, can be very tedious, with web pages sometimes taking minutes to load, and even then with only a portion of the web pages being displayed due to the limited screen size of typical mobile devices. That is, the limited available area for displaying content to the user serves as a significant limitation on the overall user experience.

The recent innovations disclosed in the parent application hereto, having U.S. Publication No. 2007/001161, have effectively combated many of the drawbacks associated with experiencing online services and content using mobile devices. However, there are still many times when the limited capabilities of the mobile device prevent full rendering of a multi-user online environment, including presenting the multitude of available users therein. For example, in an online virtual gaming environment, the number of available players will often exceed the amount that can be reasonably displayed and/or monitored on a given mobile device. Heretofore, the only known approach to alleviating this issue has been the use of Real-time Transport Protocol (RTP) and/or Real-time Transport Control Protocol (RTCP) to perform statistical sampling of the various participants. However, this approach fails to take into account the relevance or similarity of the online users.

In addition thereto, oftentimes online users may desire to interact with or otherwise monitor only a small subset of all available online users. This may be desirable, for example, to minimize the amount of information a user has to process or to be able to more efficiently interact with specific online users. However, having the ability to select only the most relevant users to monitor at a given time has heretofore been limited at best. Accordingly, there is a need to provide the functionality for easy selection of the most relevant available users to monitor in an online environment.

### SUMMARY OF THE INVENTION

Disclosed and claimed herein is a method and user device for selectively monitoring users in an online environment. In one embodiment, the method includes entering a predefined portion of the online environment, and accessing a directory of available online users that are located within the predefined portion, where the available online users are ordered in the directory based on subject user preference and/or profile data. The method further includes selecting a subset of the available online users from the directory, and then monitoring the selected subset.

Other aspects, features, and techniques of the invention will be apparent to one skilled in the relevant art in view of the following description of the exemplary embodiments of the invention.

### BRIEF DESCRIPTION OF THE DRAWINGS

FIG. **1** illustrates a communication system in accordance with an embodiment of the invention;

FIGS. **2A-2B** illustrate a user device and corresponding software in accordance with an embodiment of the invention;

FIG. **3** illustrates an embodiment of an online environment/community services system;

FIG. **4** illustrates one embodiment of a cluster of a plurality of predefined portions of a 3D online environment that may be implemented using the online environment/community services system of FIG. **3**;

FIG. **5** illustrates an embodiment of the interaction between a client device and the online environment/community services system of FIG. **3**;

FIGS. **6**A-**6**B are graphical representations of a predefined portion of an online envimnment/community in the form of a cell, in accordance with an embodiment of the invention;

FIG. **7** illustrates one embodiment of a process for selectively monitoring users in an online environment; and

FIGS. **8**A-**8**B illustrate an online chat environment in which one embodiment of the invention may be implemented.

### DETAILED DESCRIPTION OF THE EXEMPLARY EMBODIMENTS

### Overview of the Disclosure

The present disclosure relates generally to online user interaction and particularly to monitoring a user-defined set of other online users. As will be described in more detail below, one aspect of the disclosure relates to selectively monitoring users in an online environment. In one embodiment, a subject user, after entering a predefined portion of the online environment, may access a directory of available online users that are located within that particular predefined portion. In certain embodiments, this directory may be accessed by accessing a roster application of the online environment/community server for the given predefined portion.

Another aspect of the disclosure relates to ordering the available online users in the directory based on at least one of the subject user's preference and profile data. In one embodiment, the user ordering may be based on a comparison of the subject user's preference data to one or more characteristics of the various available online users. Alternatively, or in combination with user preference data, the available online users may be ordered in the directory based on a comparison of the subject user's profile data to profile data for each of the various available online users. In either case, the final directory may contain an ordering of the available online users corresponding to the degree of relevance from the subject user's perspective. That is, the most relevant available online users may appear towards the top of the directory, while the least relevant may appear towards the bottom of the directory.

Still another aspect of the disclosure relates to enabling the subject user to select a subset of the available online users from the directory. Once the subject user has added at least one available online user to its monitor set, the subject user may be provided with periodically updated information regarding the selected subset of available online users. In one embodiment, this may include monitoring a user's location, profile, status (e.g., online, offline, busy, etc.) and/or actions.

The term "user" as used herein may refer to a particular individual or may refer to one or more "personalities" or "players" created by (or otherwise associated with) that individual. Each online persona may be visually represented by a so-called "avatar," which refers to the user's visual representation of himself or herself, typically in the form of a two-dimensional icon. In addition, personalities (aka players) may be unique to a given "instance" of an online environment, or may alternatively move between different instances. As such, it should be understood that references to users shall include, when appropriate, such users' online personas.

As used herein, the terms "a" or "an" shall mean one or more than one. The term "plurality" shall mean two or more than two. The term "another" is defined as a second or more. The terms "including" and/or "having" are open ended (e.g., comprising). Reference throughout this document to "one embodiment", "certain embodiments", "an embodiment" or similar term means that a particular feature, structure, or characteristic described in connection with the embodiment is included in at least one embodiment of the present invention. Thus, the appearances of such phrases in various places throughout this specification are not necessarily all referring to the same embodiment. Furthermore, the particular features, structures, or characteristics may be combined in any suitable manner on one or more embodiments without limitation. The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

In accordance with the practices of persons skilled in the art of computer programming, the invention is described below with reference to operations that are performed by a computer system or a like electronic system. Such operations are sometimes referred to as being computer-executed. It will be appreciated that operations that are symbolically represented include the manipulation by a processor, such as a central processing unit, of electrical signals representing data bits and the maintenance of data bits at memory locations, such as in system memory, as well as other processing of signals. The memory locations where data bits are maintained are physical locations that have particular electrical, magnetic, optical, or organic properties corresponding to the data bits.

When implemented in software, the elements of the invention are essentially the code segments to perform the necessary tasks. The code segments can be stored in a processor readable medium, which may include any medium that can store or transfer information. Examples of the processor readable mediums include an electronic circuit, a semiconductor memory device, a read-only memory (ROM), a flash memory or other non-volatile memory, a floppy diskette, a CD-ROM, an optical disk, a hard disk, a fiber optic medium, a radio frequency (RF) link, etc. Overview of an Exemplary Online Environment

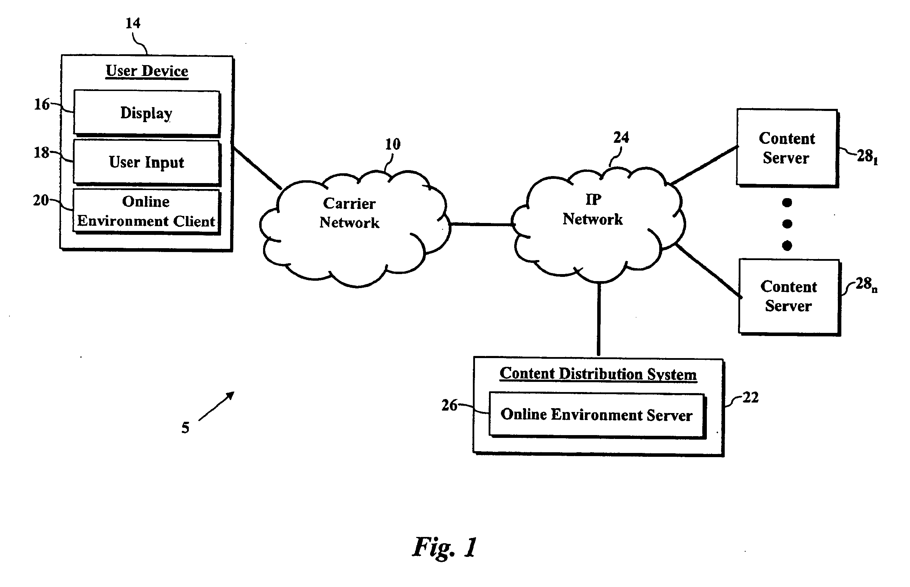

FIG. **1** depicts a communication system **5** in which one or more aspects of the invention may be implemented. In particular, communication system **5** is depicted as including a carrier network **10** which provides wireless communications services to at least one user device **14**. The carrier network **10** supports at least one wireless communications protocol such as Global System for Mobile communications (GSM), General Packet Radio Service (GPRS), Code Division Multiple Access (CDMA) or Wideband CDMA (WCDMA). The user device **14** may be any electronic device adapted to communicate with the carrier network **10**, such as a cellular telephone, smartphone, personal digital assistant (PDA), handheld computer, etc.

The user device **14** includes a display **16,** a user input **18** and an online environment client **20**, which in one embodiment comprises one or more software modules executable by a processor (not shown) of the user device **14**. While in one embodiment, the display **16** may be an LCD, it should equally be appreciated that any other type of display consistent with the principles of the invention may be used. The user input **18** may include one or more buttons or keys in the form of a keypad, number pad, keyboard or any other collection of individual keys, buttons or the like. In another embodiment, the user input **18** may be integrated with the display **16** in the form of a touch screen. In one embodiment, the user device **14** will be a resource-limited device, with limited processing and/or data storage capabilities.

In operation, the online environment client **20** facilitates the display of a graphical user interface (GUI) on the display **16** via which a user may experience online content, environments and/or services. In one embodiment, the online environment client **20** may be a 3DGUI client as detailed in previously-incorporated U.S. Publication No. 2007/001161 (hereinafter "Pub. No. ' 161 "). It should further be appreciated that the online environment client **20** may be used as or otherwise incorporated with an operating system interface, an application interface, a web browser interface or an interface to other environments in which there is user interaction. It should further be appreciated that, while reference will be made to the system disclosed in Pub. No. '161, it should be appreciated that the principles of the invention are not intended to be limited to such system, and numerous other systems, platforms and architectures would be consistent with and included-within the scope of the present disclosure.

In certain embodiments, the online environment client **20** may be adapted to enable a user to request content from a content distribution system **22**, which is connected to the carrier network **10** through an Internet Protocol (IP) network **24** (e.g., the Internet). In certain embodiments, the content may be multimedia content (e.g., music, video, images, etc.), while in other embodiments the requested content may relate to an online environment (virtual or real) which a user may navigate through and visually experience. To that end, in one embodiment the content distribution system **22** may include an online environment server **26** that provides the content for generation of the graphical representation of the online environment on the display **16** of the user device **14**. In certain embodiments, the online environment server **26** may access one or more content servers **28₁-28ₙ** connected to the IP network **24** in connection with providing content (environment related or otherwise) and/or services to the user device **14**.

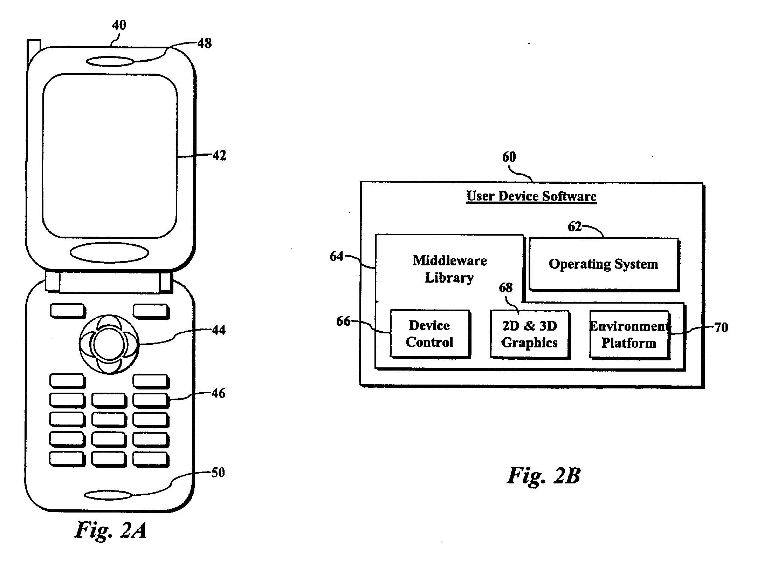

Referring now to FIG. **2**A, depicted is one embodiment of a user device **14** of FIG. **1**. In this embodiment, the user device is a mobile phone **40** and includes a display **42**, a directional input **44**, a keypad **46**, a speaker **48** and a microphone **50**. It should of course be appreciated that mobile phone **40** is a non-limiting example of one possible user device.

The mobile phone **40** further includes a processor for executing certain software, such as the user device software **60** of FIG. **2**B. As shown in FIG. **2**B, user device software **60** may include an operating system **62** and a middleware library **64**. It will be appreciated that the client software **60** may be implemented as software, hardware or a combination thereof, and may incorporate alternative programming and operating online environments. It should further be appreciated that the mobile phone **40**, like typical cellular telephones, may be a resource-limited device with limited processing and/or data storage capabilities.

The middleware library **64** includes device control functions **66**, 2D and/or 3D graphics APIs **68**, and functions to facilitate a virtual online environment platform **70**. The device control functions **66** may include key sense operations, display control (e.g., backlight LCD blinking), vibration control, music and sound control, and other device-specific control functions. The graphics APIs **68** may include 2D and/or 3D graphics functions including basic primitive handling, rendering, texturing and materials functions, translation, rotation and scaling of 2D and/or 3D objects and animation. In an exemplary embodiment, the graphics APIs **68** include functions for lighting effects including Gouraud shading, environmental lighting, environmental mapping (specular light) and tune shading. Standard graphics APIs may be used such as APIs defined in the OpenGL standard. The virtual environment platform **70** may include APIs for implementing the online environment GUI described herein, including functions for building and managing cells, reactors and actors, displaying cells and walkthrough interactivity as described in Pub. No '161.

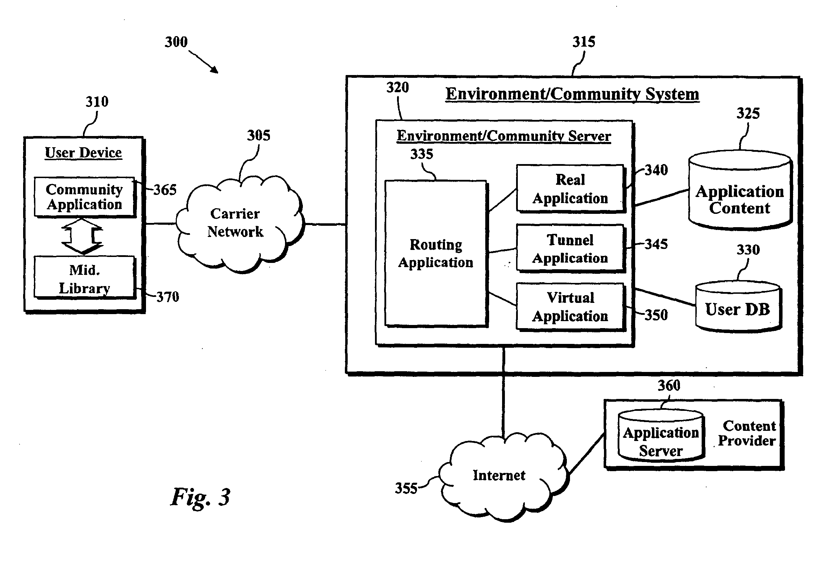

One embodiment of an online environment in which the invention may be implemented will now be described with reference to FIG. **3**. Online environments (or worlds) may be used to connect people through social networking services such as dating services, blogs, instant messaging, mail and online events. Some online environments include virtual communities allowing a user to play the part of a character(s) in a virtual world, play games against other people on the network and participate in other virtual services. Users may create one or more online "personalities" or "players" whose avatars are visually perceptible to others accessing the online environment. In addition, such players may be unique to a given "instance" of the online environment, or may alternatively move between different instances.

To that end, FIG. **3** depicts a communication system **300** in which online community services may be provided to subscribers of the carrier network **305**, such as user device **310**. The communication system **300** includes an online environment/community system **315**, which includes an online environment/community server **320**, an application content server **325** and a user database **330**. In one embodiment, the online environment/community server **320** is a 3DGUI content server, as disclosed in Pub. No. '161, which may include one or more of a routing application **335**, a real application **340,** a tunnel application **345** and a virtual application **350**. In one embodiment, the real application **340** may provide real-world services to the user device **310** such as a dating service, mapping service and news delivery. The virtual application **350** may provide content representative of a virtual community to the user device **310**. Virtual services may include games and 3D virtual environments that the user may explore. In addition, the tunnel application **345** may be used to facilitate movement between the real and virtual worlds. In certain embodiments, the online environment/community server **320** may interface with the Internet **355** providing access to third-party content from one or more content providers **360**.

Continuing to refer to FIG. **3**, the user device **310** includes an online environment/community application **365** that interfaces with the middleware libraries **370** (e.g., middleware library **64** in FIG. **2**B). In one embodiment, the user device **310** is adapted to retrieve community data and content from the online environment/community server **320** and provide the user with online environment/community services through the online environment/community application **370** (e.g., 3DGUI platform disclosed in Pub. No. '161).

In one embodiment, the online environment/community server **320** pushes certain content to the user device **310** through space-time pushing, psychological profile pushing and/or cell plan synchronized pushing. To facilitate pushing, the online environment/community server **320** may be interfaced with a push proxy gateway which routes incoming data to a Short Message Service Center (SMSC) for text messaging, or a Cell Broadcast Service Center (CBSC) for broadcast messages such as advertisements including graphics, text, sound and link data. The interface may be facilitated over the Session Initiation Protocol (SIP) or Push Access Protocol (PAP). The online environment/community server **320** may so interface with a multimedia messaging service center (MMSC) via the MM7 protocol for delivery of multimedia content to the user device **310**. As with the community server disclosed in Pub. No. '161, the online environment/community server **320** may also be connected to an HTTP proxy to facilitate data exchange using any known packet-based protocols.

Location-based information services may also be provided by the online environment/community server **320** using location information provided by the carrier network **305** regarding the user device **310**. To accomplish this, the online environment/community server **320** may be interfaced with carrier network databases, including a home location register (HLR), a location server via a multilink PPP (MLP) interface, and/or a provisioning server via a Lightweight Directory Access Protocol (LDAP) interface.

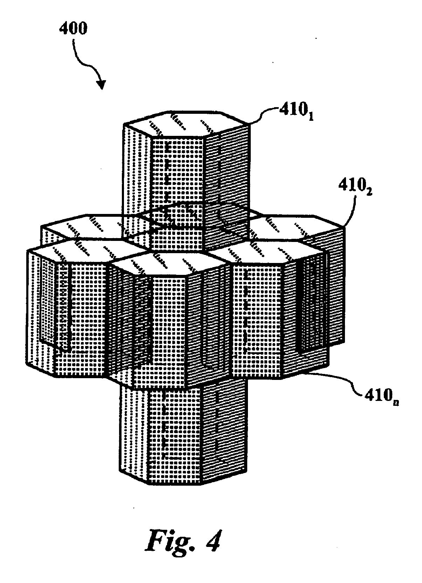

Referring now to FIG. **4**, depicted is a representation of a portion of a 3D online environment. As shown, a plurality of cells **410₁-410ₙ** ("**410**") may be linked together forming a cluster of adjacent cells **400**. Each cell **410** may be linked to one or more adjacent cells. Any surface of a given cell **410** may be configured to link to a surface of a another adjacent cell **410**. In operation, a user may navigate through the three-dimensional geographic space defined by the cluster **400**. In another embodiment, the cell cluster **400** may instead be a 2D online environment. It should further be appreciated that the cluster **400** may also be linked to one or more other clusters (not shown). The user may be presented with various views to assist in user navigation through clusters of cells, where the exterior of each cell may include a graphical representation of the cell's type or contents or alternatively, the exterior surfaces may provide a window into the contents of the cell. While the cells **410** have been depicted in a hexagonal shape, it should equally be appreciated that an area (in the case of a 2D environment) or volume (in the case of a 3D environment) may be graphically represented using any geometric shape representative thereof.

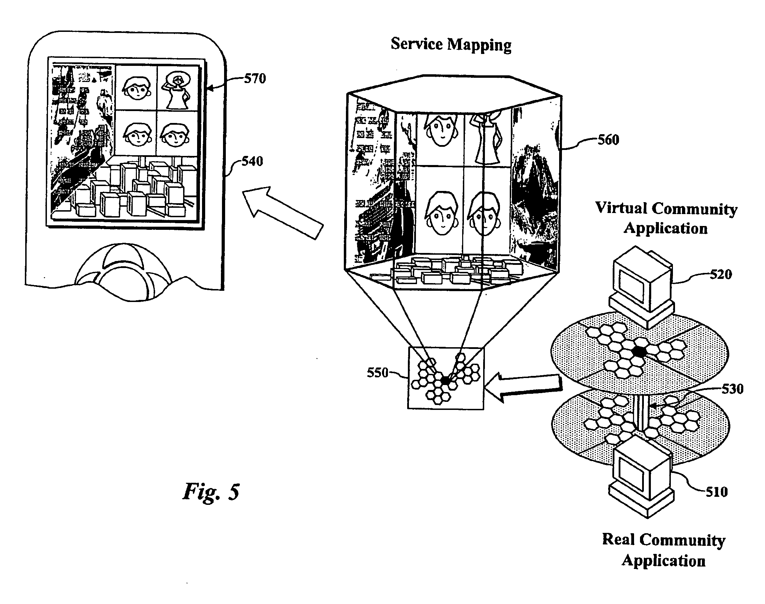

Referring now to FIG. **5**, depicted is a relational representation of a real environment/community server **510** (e.g., real application **340** in FIG. **3**) and a virtual environment/community server **520** (e.g., virtual application **350** in FIG. **3**). A user may transition from one online environment to another via tunnel **530**. In one embodiment, the online environment/community server **510** and **520** may respond to a requesting user device **540** with service-map and link-data **550**. The environment data stored in the community server(s) may be formatted as HyperText Markup Language (HTML), Wireless Markup Language (WML) or any other standard format. The retrieved environment data may then be provided to a GUI library in a middleware library (e.g., middleware library **64** in FIG. **2**B) of the user device for generation and display of the particular cell **560**.

The 2D or 3D-rendering of the community data may then be processed by the user device **540** and presented to the user on display **570**. If the parser of a conventional web browser is used, then the community data may be drawn as a web page in the usual 2D-rendering manner. As previously mentioned, to process the community data, the middleware library may include community APIs providing space-time driven content service and a profile-driven content service, and 2D/3D graphics features facilitating walkthrough environment/community operation, such as the operations described in Pub. No. 161.

In certain embodiments, a cell-based virtual environment/community may provide the various interactive services and support the navigation and story making. Alternatively, a cell-based real environment/community (or instance thereof) may provide real services such as navigation services, dating services, news services and shopping services. Various community spaces are browsed by walkthrough operation, and various interactive events may occur inside the space.

To that end, the real environment/community may be driven by real space-time such as local time, GPS position, cell position or service area of the carrier network (e.g., carrier network **305** in FIG. **3**). The content available in the real environment/community may be correspondingly linked to the real space-time and provided to the user within the real environment/community in accordance with the real space-time. Such content may include local maps, identity of those within the vicinity, local news and local services such as restaurants.

In contrast, the virtual environment/community may be driven by a virtual space-time which is set by each application of an "instance" of a virtual environment/community. By way of example, a user may first execute an online environment client (e.g., browser application, 3DGUI, etc.) on the user device **570**. The online environment client retrieves the content for the first cell (e.g., cell **560**) from the content distribution system (e.g., real or virtual environment/community servers **510** and **520**). This content is then provided to a space builder application which constructs the cell **560** and provides an initial view for the display **570.** The user (through their online persona or avatar) interacts with the display **570** using the user device to navigate the contents of the cell **560** and select links for further browsing of other cells, web pages or online resources generally.

### Exemplary Embodiments for Selective User Monitoring

What has been described above is an exemplary environment in which the invention may be implemented. As previously mentioned, the user device with which the online environment/community is accessed may be a resource-limited device, having limited processing and/or data storage capabilities. Examples of such user devices may include cellular telephones, smartphones, PDAs, handheld computers, or the like. In a multi-user environment or community, for example, such a device may not be able to properly render a complex map and/or properly present all of the other available users/players with which a subject user may want to interact. As such, it may be desirable for a given user to interact with a selective subset of the other users/players in a gaming application, social networking application, or the like. Irrespective of the processing resources available, a subject user may desire the functionality of being able to select only the most relevant available users to monitor in an online environment.

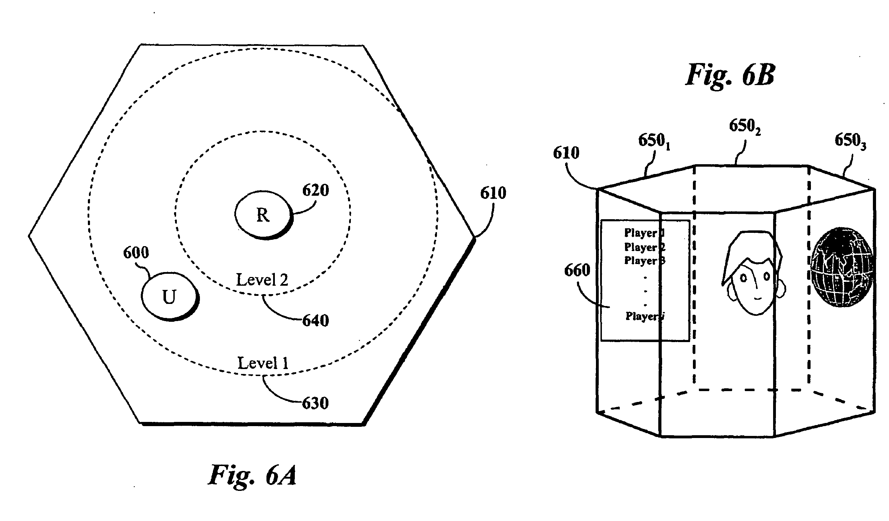

To that end, FIGS. **6**A-**6**B depict graphical representations of a predefined portion (e.g., cell) of an online environment/community which a subject user may enter. In particular, subject user **600** may control an online persona or avatar within a cell **610**. Upon entering the cell, the user **600** may explore and interact with the cell **600**'s contents. In various applications the user may perform a variety of actions such as walking, running, jumping, smiling, conversing, etc. The interface may display the cell from different points of view such as a camera view, subjective view and distance view, as the user so desires.

In one embodiment, the interaction inside the cell **610** is facilitated by the spatial relations between the user **600** and one or more reactors, such as reactor **620.** In one embodiment, the reactor **620** may be another online user (or their associated persona) or any virtual point of interest within the online environment. In another embodiment, the reactor **620** may be an interactive object or character in a cell which may be configured to react to the user **600**, such as in response to the distance between the reactor **620** and the user **600**. The reactor **620** may be any object such as an animal, a door or a web link, and may be graphically represented. For example, three levels of interaction may be defined depending on the distance between the user **600** to the reactor **620**. A Level 1 response may occur when the user **600** is in the vicinity **630** of the reactor **620**. A Level **2** response occurs when the user **600** moves to vicinity **640**. Finally, a Level **3** response may occur when the actor **600** makes contact with, or otherwise interacts with, the reactor **620**. It should further be appreciated that each user **600** may include one or more attributes, which may create different responses in the reactor **620**.

Referring now to FIG. **6**B, depicted is a 3D version of cell **610** in which he the user **600** may interact with any one of the three panels 650₁-650₃. While it should be understood that the panels **650₁-650₃** may enable the user **600** to access or interact in a multitude of ways, in the embodiment of FIG. **6**B panel **650₂** corresponds to interaction with an available online user, while panel **650₃** corresponding to a mapping application from which the user **600** may access other portions (e.g., cells) of the online environment.

Panel **650₁**, in turn, corresponds to a directory **660** of all available online users located within cell **610**. In one embodiment, this directory **660** may be in the form of a roster application executing on the online environment server (e.g., online environment/community server **320** in FIG. **3**) and presented to the subject user on a display (e.g., display **570** in FIG. **3**). This roster application may be used to generate and maintain a list of all online users present in a given cell (e.g., cell **610**) or "room" at a given time, Moreover, each cell (e.g., cells **410** in FIG. **4**) may have an associated directory generated by the roster application listing all of the users currently in that cell. While the roster application may be described herein with reference to a list of online users within a given cell, it should equally be appreciated that the roster application may similarly apply to a collection of users located across more than one cell or any other predefined portion of the online environment.

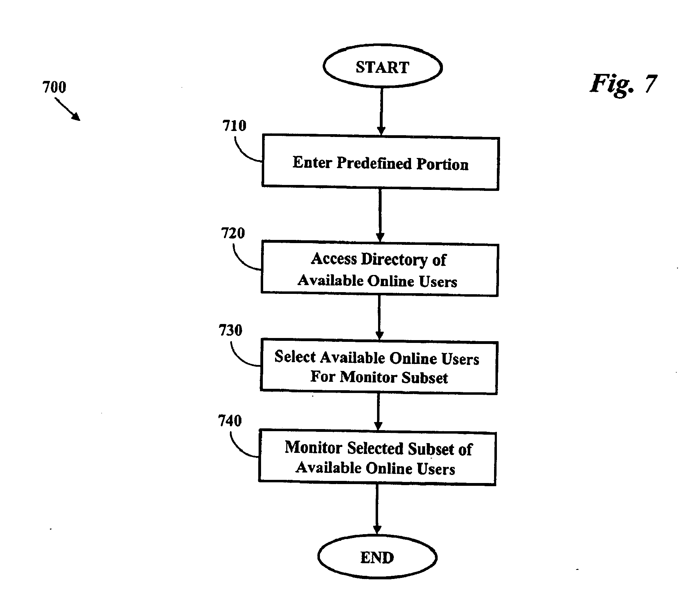

Referring now to FIG. **7**, depicted is one embodiment of a process for selectively monitoring users in an online environment. Process **700** assumes a user has already accessed an online environment generated, for example, by accessing an online environment/community server (such as server **320** in FIG. **3**) using a wireless user device (such as user device **310**) executing an environment application (e.g., online environment/community application **365**).

With that, process **700** begins at block **710** with the subject user entering a predefined portion of the online environment. While in one embodiment this predefined portion may be an individual cell (e.g., cell **610** in FIG. **6**), it may correspond to more than one cell or other any other predefined portion of the online environment. Once the user is in the predetermined portion, process **700** continues to block **720** where the user may access a directory of available online users that are located within the predefined portion entered at block **710.** In certain embodiments, this directory may be accessed by accessing a roster application of the online environment/community server for the given predefined portion.

Another aspect of the invention is to order the available online users in the directory based on at least one of the subject user's preference and profile data. In one embodiment, the user ordering may be based on a comparison of the subject user's preference data to one or more characteristics of the various available online users. Such preference data may include one or more of age, gender, interests, habits, personality, inclusion on a block list, inclusion on a buddy list, historical interaction data, skill level, physical appearance data and familial data. Alternatively, or in combination with user preference data, the available online users may be ordered in the directory based on a comparison of the subject user's profile data to profile data for each of the various available online users. In either case, the final directory may contain an ordering of the available online users corresponding to the degree of relevance from the subject user's perspective. That is, the most relevant available online users will appear towards the top of the directory, while the least relevant appear towards the bottom of the directory. This relevance ordering may be based on a numerical scoring in a predefined range (e.g., 0 to 1).

At this point, process **700** may continue to block **730** where the subject user may then select a subset of the available online users from the directory. This subset or "monitor set" may be limited to some maximum number of users. This maximum may be based on, for example, the type of subject user device, available device resources, subject user preference data, and context-specific data (e.g., current user activity).

Once the subject user has added at least one available online user to its monitor set, process **700** continues to block **740** where the subject user may begin monitoring the selected subset of available online users. In one embodiment, this may include monitoring one or more of a user location, status (e.g., online, offline, busy, etc.), user action and profile data. To that end, information pertaining to the behavior of the selected subset may be provided to the subject user and possibly periodically updated.

Still another aspect of the disclosure is to allow the monitor set to be dynamic. To that end, the users within a monitor set may be periodically evaluated to see if they are still in the predefined portion entered above at block **710**. The selected subset may also be evaluated to be sure that the various users therein are still logged in. In the event that it is detected that one of the selected subset of available online users is no longer available, that user may be removed from the subject user's monitor set. It should be appreciated that this dynamic evaluation may be automatic or manual. Automatic re-computation could be based on a fixed timer setting or variable timer depending on, for example, device type, user context and other variables.

It should further be appreciated that monitor sets need not be symmetric. In other words, if user A is in user B's monitor set, user B need not necessarily be in user A's monitor set. Again, it should be appreciated that throughout this disclosure references to users is inclusive of their online personas and, as such, their online representations (i.e., avatars).

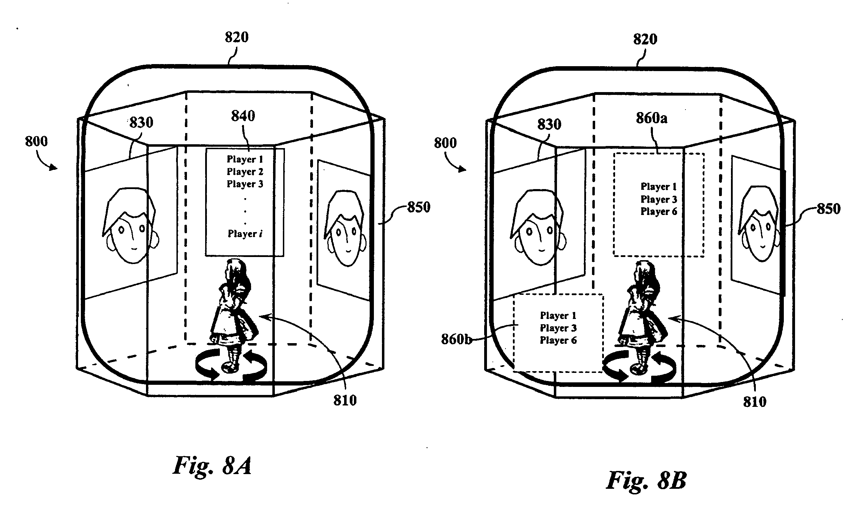

Referring now to FIGS. **8**A-**8**B, illustrated is one embodiment of a chat application in which one or more aspects of the invention may be implemented. In one embodiment, the chat application may be an instantiation of an online environment/community system as described above with reference to FIG. **3**.

As shown, a user **810** may enter a chat room cell **800** and "look" around the cell using input functions of a user mobile device (e.g., device **310**). While in the embodiment of FIGS. **8**A-**8**B, a 3D environment has been depicted, it may similarly be a 2D environment in another embodiment. In still other embodiments, the invention may be applicable to n-dimensional applications, where n is an integer greater than **3** (i.e., nD). For example, a time dimension may be accounted for in a four-dimensional environment. In any event, in FIG. **8**A a portion of the cell **800** is visible to the user through the display **820.** The user **810** may check the other online users or access various interactive options by selecting from among a series of panels (or any other graphic) using, for example, keys on a user device. In the embodiment of FIG. **8**A**,** online users **830** and **850** are depicted as being available for interaction (e.g., chatting).

Continuing to refer to FIG. **8**A, the middle panel depicts a directory **840** of all available online users located within cell **800**. In one embodiment this directory **840** may be a roster application, as previously described, which is maintained by an online environment server and presented to the subject user on the display **820**. In one embodiment, directory **840** contains a list of all online users currently in cell **800**.

Not only does directory **840** contain a list of all online users currently in cell **800**, but the list may order the users in accordance with the subject user's preferences and/or profile data. As described above in more detail, the directory ordering may be based a comparison of the subject user's preference data to one or more characteristics of the various available online users, and/or a comparison of the subject user's profile data to profile data for each of the various available online users. In any event, in one embodiment the directory **840** contains a listing of the available online users in an order that is specifically relevant to the subject user **810**.

Referring now to FIG. **8**B, depicted is the cell **800** after the user **810** has selected **3** users from the directory **840** to add to his/her monitor set (i.e., monitor set **860***a* or **860***b*). In particular, user **810** has added Player **1**, Player **3** and Player **6** to his/her monitor set. It should be appreciated that the monitor set may be displayed on a panel as monitor set **860a** or as an overlay shown as monitor set **860***b*. Regardless of the display location, the user **810** may monitor the location, status and/or actions of the selected users which comprise the monitor set. To that end, it should be appreciated that a subject user's monitor set need not simply display the identity of the selected users, but may also display information regarding that user's behavior.

While the invention has been described in connection with various embodiments, it should be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for a subject user to selectively monitor users in an online environment comprising the acts of:
entering a predefined portion of the online environment;
accessing a directory of available online users that are located within the predefined portion, wherein the available online users are ordered in the directory based on at least one of subject user preference and profile data;
selecting a subset of the available online users from the directory; and
monitoring said selected subset of available online users.

2. The method of claim 1, wherein the online environment is segmented into a plurality of cells and the predefined portion is one of those plurality of cells.

3. The method of claim 1, wherein the available online users are ordered in the directory based on a comparison of the subject user preference data to one or more characteristics of the available online users.

4. The method of claim 3, wherein the subject user preference data includes one or more of age, gender, interests, habits, personality, inclusion on a block list, inclusion on a buddy list, historical interaction data, skill level, physical appearance data and familial data.

5. The method of claim 3, wherein the available online users are ordered in the directory based on a comparison of the subject user profile data to profile data for each of the available online users.

6. The method of claim 1, wherein monitoring comprises monitoring one or more of a location, profile, status and action of the available online users in the selected subset.

7. The method of claim 1, further comprising the acts of:
detecting that one of the selected subset of available online users is no longer available; and
removing said one of the selected subset of available online users from the selected subset in response to said detecting.

8. The method of claim 1, wherein the subset of available online users contains a maximum number of users that is based on at least one of a type of subject user device, available device resources, and subject user preference data.

9. An online environment server comprising:
a network interface configured to connect the server to a wireless network;
a processor electrically coupled to the network interface; and
a memory electrically coupled to the processor, the memory containing processor-executable instructions implementing the online environment, the server configured to:
receive a request from the subject user to enter a predefined portion of the online environment,
generate a directory of available online users that are located within the predefined portion,
order the available online users in the directory based on at least one of subject user preference and profile data,
receive a selection request from the subject user for a subset of the available online users, and
provide monitor data to the subject user for said selected subset of available online users.

10. The server of claim 9, wherein the online environment is segmented into a plurality of cells and the predefined portion is one of those plurality of cells.

11. The server of claim 9, wherein the server is configured to order the available online users in the directory based on a comparison of the subject user preference data to one or more characteristics of the available online users.

12. The server of claim 11, wherein the subject user preference data includes one or more of age, gender, interests, habits, personality, inclusion on a block list, inclusion on a buddy list, historical interaction data, skill level, physical appearance data and familial data.

13. The server of claim 11, wherein the server is configured to order the available online users in the directory based on a comparison of the subject user profile data to profile data for each of the available online users.

14. The server of claim 9, wherein the monitor data includes one or more of a location, status, profile and action of the available online users in the selected subset.

15. The server of claim 9, wherein the server is further configured to:
detect that one of the selected subset of available online users is no longer available; and
remove said one of the selected subset of available online users from the selected subset in response to said detection.

16. The server of claim 9, wherein the subset of available online users contains a maximum number of users that is based on at least one of a type of subject user device, available device resources, and subject user preference data.

17. A computer program product, comprising:
a processor readable medium having processor executable code embodied therein to enable a subject user to selectively monitor users in an online environment, the processor readable medium having:
processor executable program code for the subject user to enter a predefined portion of the online environment,
processor executable program code to access a directory of available online users that are located within the predefined portion, wherein the available online users are ordered in the directory based on at least one of subject user preference and profile data,
processor executable program code to select a subset of the available online users from the directory, and
processor executable program code to monitor said selected subset of available online users.

18. The computer program product of claim 17, wherein the online environment is segmented into a plurality of cells and the predefined portion is one of those plurality of cells.

19. The computer program product of claim 17, wherein the available online users are ordered in the directory based on a comparison of the subject user preference data to one or more characteristics of the available online users.

20. The computer program product of claim 19, wherein the subject user preference data includes one or more of age, gender, interests, habits, personality, inclusion on a block list, inclusion on a buddy list, historical interaction data, skill level, physical appearance data and familial data.

21. The computer program product of claim 19, wherein the available online users are ordered in the directory based on a comparison of the subject user profile data to profile data for each of the available online users.

22. The computer program product of claim 17, wherein the processor executable program code to monitor comprises processor executable program code to monitor one or more of a location, status, profile and action of the available online users in the selected subset.

23. The computer program product of claim 17, wherein the processor readable medium further comprises processor executable program code to:
detect that one of the selected subset of available online users is no longer available; and
remove said one of the selected subset of available online users from the selected subset in response to said detecting.

24. The computer program product of claim 17, wherein the subset of available online users contains a maximum number of users that is based on at least one of a type of subject user device, available device resources, and subject user preference data.

25. A handheld electronic device operable by a subject user and configured to communicate with an online environment server over a wireless network, the electronic device comprising:
a memory containing processor-executable instructions implementing an online environment application client for accessing an online environment; and
a processor electrically coupled to the memory, the processor configured to execute the application client to:
enter a predefined portion of the online environment,
access a directory of available online users that are located within the predefined portion, wherein the available online users are ordered in the directory based on at least one of subject user preference and profile data,
select a subset of the available online users from the directory, and
monitor said selected subset of available online users.

26. The handheld electronic device of claim 25, wherein the online environment is segmented into a plurality of cells and the predefined portion is one of those plurality of cells.

27. The handheld electronic device of claim 25, wherein the available online users are ordered in the directory based on a comparison of the subject user preference data to one or more characteristics of the available online users.

28. The handheld electronic device of claim 27, wherein the subject user preference data includes one or more of age, gender, interests, habits, personality, inclusion on a block list, inclusion on a buddy list, historical interaction data, skill level, physical appearance data and familial data.

29. The handheld electronic device of claim 27, wherein the available online users are ordered in the directory based on a comparison of the subject user profile data to profile data for each of the available online users.

30. The handheld electronic device of claim 25, wherein the selected subset of available online users are monitored by monitoring one or more of a location, status, profile and action of the available online users in the selected subset.

31. The handheld electronic device of claim 25, wherein the processor is configured to execute the application client to further:
detect that one of the selected subset of available online users is no longer available; and
remove said one of the selected subset of available online users from the selected subset in response to said detecting.

32. The handheld electronic device of claim 25, wherein the subset of available online users contains a maximum number of users that is based on at least one of a type of subject user device, available device resources, and subject user preference data.
